(19)

**Europäisches Patentamt**
**European Patent Office**
**Office européen des brevets**

(11) **EP 4 678 012 A1**

(12) **EUROPEAN PATENT APPLICATION**

(43) Date of publication:
**14.01.2026 Bulletin 2026/03**

(21) Application number: **25184504.6**

(22) Date of filing: **23.06.2025**

(51) International Patent Classification (IPC):
**A23L 19/18** (2016.01)     **G06Q 10/04** (2023.01)

(52) Cooperative Patent Classification (CPC):
**A23L 19/18; G06Q 10/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.07.2024 IN 202421052479**

(71) Applicant: **Tata Consultancy Services Limited
Mumbai, Maharashtra 400 021 (IN)**

(72) Inventors:
• **PATEL, Mihirkumar Manishbhai
411057 Pune, Maharashtra (IN)**

• **PANDE, Harshvardhan
411057 Pune, Maharashtra (IN)**
• **SACHANIA, Hitanshu Mitesh
411057 Pune, Maharashtra (IN)**
• **SHRIVASTAVA, Surabhi
411057 Pune, Maharashtra (IN)**
• **KAPSE, Shrikant Arjunrao
411057 Pune, Maharashtra (IN)**
• **KAUSLEY, Shankar Balajirao
411057 Pune, Maharashtra (IN)**
• **RAI, Beena
411057 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR PREDICTING FRIED FOOD ITEM QUALITY AND OPTIMUM PROCESSING AND PACKAGING PARAMETERS**

(57)     Existing techniques lack control over how processes involved in fried food item manufacturing affect each other which leads to systemic losses in raw materials and sub-optimal set-points for process parameters. The present method predicts one or more quality parameters comprising oil uptake specific to food item on frying, by providing one or more parameters specific to food item to be fried, one or more frying oil parameters and one or more frying operating parameters as input to frying model. Fat concentration contained in fried food item prior to packaging is calculated using fat conversion model and shelf life of food item is predicted using packaging model. The one or more parameters specific to fried food item, one or more frying oil parameters, one or more frying operating parameters and one or more packaging parameters are optimized using optimized oil uptake and threshold moisture content by employing an optimization technique.

FIG. 2

EP 4 678 012 A1

**Description**

CROSS-REFERENCE TO RELATED APPLICATIONS AND PRIORITY

The present application claims priority to Indian application no. 202421052479, filed on July 09, 2024.

TECHNICAL FIELD

The disclosure herein generally relates to food quality prediction and optimization of processing parameters, and, more particularly, to a method and system for predicting fried food item quality and optimum processing and packaging parameters.

BACKGROUND

The manufacturing of a fried food item involves multiple processes in tandem, each with their own specific constraints. For example, manufacturing potato chips includes various steps such as blanching, slicing, drying, frying, seasoning, and packaging but frying and packaging are the critical steps in the potato chips production and storage. In the frying process, potato slices of a certain thickness containing initial moisture are deep fried in oil at a certain temperature for a certain duration. Combinations of these parameters result in the potato chips of a specific quality as reflected by the amount of oil the chips uptake (%w/w, wet basis) and the amount of moisture they retain (%w/w, wet basis).
Existing techniques including frying process or packaging process might have been studied in depth, but, how the variation in process parameters of one process affects the others has not been explored before. This lack of control over how the processes affect each other and the final quality of the product can lead to systemic losses in raw materials and sub-optimal set points for process parameters. Traditionally, transport models have been used to simulate how oil and moisture concentrations in the potato slices change along the duration of frying. Their use is limited to cases where experimental data is available to construct transport equations, leaving many cases without experimental evidence out of their scope.
Currently, process parameters for the frying process in the manufacturing of fried items such as potato chips are set by heuristic or experiential knowledge, which may overlook the complexities involved in the process itself. Such approaches may lead to sub-optimal decision-making. Further it is time consuming to generate experimental data for each individual case or for every different condition. Furthermore, it is hard to correlate variable with each other by physics based modeling and only from experimental data.

SUMMARY

Embodiments of the present disclosure present technological improvements as solutions to one or more of the above-mentioned technical problems recognized by the inventors in conventional systems. For example, in one embodiment, a method for predicting fried food item quality and optimum processing and packaging parameters is provided. The method includes receiving, via one or more hardware processors, one or more parameters specific to a food item to be fried, one or more frying oil parameters, one or more frying operating parameters, one or more packaging parameters, threshold moisture content and a desired shelf life for a fried food item, wherein the fried food item is the food item obtained after frying; predicting, via the one or more hardware processors, one or more quality parameters comprising an oil uptake specific to the food item on frying, based on the one or more parameters specific to the food item to be fried, the one or more frying oil parameters and the one or more frying operating parameters using a frying model; calculating, via the one or more hardware processors, a fat concentration contained in the fried food item prior to packing based on the predicted oil uptake using a fat conversion model; predicting, via the one or more hardware processors, a shelf life of the fried food item post packaging based on the calculated fat concentration and the one or more packaging parameters using a packaging model; calculating, via the one or more hardware processors, an absolute difference between the predicted shelf life of the fried food item and the desired shelf life of the fried food item as a first objective function; and optimizing, via the one or more hardware processors, at least one of the one or more parameters specific to the fried food item, the one or more frying oil parameters, the one or more frying operating parameters and the one or more packaging parameters based on the calculated absolute difference to achieve at least one of the desired shelf life of the fried food item and the quality of the fried food item by - determining an optimized fat concentration and one or more optimized packaging parameters for the desired shelf life of the fried food item by employing an optimization technique; calculating an optimized oil uptake from the optimized fat concentration using the fat conversion model; and obtaining one or more optimized parameters specific to the fried food item, one or more optimized frying oil parameters and one or more optimized frying operating parameters using the optimized oil uptake and the threshold moisture content by employing an optimization technique.
In another aspect, there is provided a system for predicting fried food item quality and optimum processing and packaging parameters. The system comprises: a memory storing instructions; one or more communication interfaces; and one or more hardware processors coupled to the memory via the one or more communication interfaces, wherein the one or more hardware processors are configured by the instructions to: receive one or more parameters specific to a food item to be fried, one or more frying oil parameters, one or more frying operating parameters, one or more packaging parameters, threshold moisture content and a desired shelf life for a fried food item, wherein the fried food item is the food item obtained after frying. The system further includes predicting, one or more quality parameters comprising an oil uptake specific to the food item on frying, based on the one or more parameters specific to the food item to be fried, the one or more frying oil parameters and the one or more frying operating parameters using a frying model; calculating, a fat concentration contained in the fried food item prior to packing based on the predicted oil uptake using a fat conversion model; predicting, a shelf life of the fried food item post packaging based on the calculated fat concentration and the one or more packaging parameters using a packaging model; calculating, an absolute difference between the predicted shelf life of the fried food item and the desired shelf life of the fried food item as a first objective function; and optimizing, at least one of the one or more parameters specific to the fried food item, the one or more frying oil parameters, the one or more frying operating parameters and the one or more packaging parameters based on the calculated absolute difference to achieve at least one of the desired shelf life of the fried food item and the quality of the fried food item by - determining an optimized fat concentration and one or more optimized packaging parameters for the desired shelf life of the fried food item by employing an optimization technique; calculating an optimized oil uptake from the optimized fat concentration using the fat conversion model; and obtaining one or more optimized parameters specific to the fried food item, one or more optimized frying oil parameters and one or more optimized frying operating parameters using the optimized oil uptake and the threshold moisture content by employing an optimization technique.

In yet another aspect, there are provided one or more non-transitory machine-readable information storage mediums comprising one or more instructions which when executed by one or more hardware processors cause receiving one or more parameters specific to a food item to be fried, one or more frying oil parameters, one or more frying operating parameters, one or more packaging parameters, threshold moisture content and a desired shelf life for a fried food item, wherein the fried food item is the food item obtained after frying; predicting, one or more quality parameters comprising an oil uptake specific to the food item on frying, based on the one or more parameters specific to the food item to be fried, the one or more frying oil parameters and the one or more frying operating parameters using a frying model; calculating, a fat concentration contained in the fried food item prior to packing based on the predicted oil uptake using a fat conversion model; predicting, a shelf life of the fried food item post packaging based on the calculated fat concentration and the one or more packaging parameters using a packaging model; calculating, an absolute difference between the predicted shelf life of the fried food item and the desired shelf life of the fried food item as a first objective function; and optimizing, at least one of the one or more parameters specific to the fried food item, the one or more frying oil parameters, the one or more frying operating parameters and the one or more packaging parameters based on the calculated absolute difference to achieve at least one of the desired shelf life of the fried food item and the quality of the fried food item by - determining an optimized fat concentration and one or more optimized packaging parameters for the desired shelf life of the fried food item by employing an optimization technique; calculating an optimized oil uptake from the optimized fat concentration using the fat conversion model; and obtaining one or more optimized parameters specific to the fried food item, one or more optimized frying oil parameters and one or more optimized frying operating parameters using the optimized oil uptake and the threshold moisture content by employing an optimization technique.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for predicting fried food item quality and optimum processing and packaging parameters, according to some embodiments of the present disclosure.
FIG. 2 illustrates a functional block diagram of the system for predicting fried food item quality and optimum processing and packaging parameters, according to some embodiments of the present disclosure.
FIGS. 3A and 3B are flow diagrams illustrating the steps involved in the method for predicting fried food item quality and optimum processing and packaging parameters, according to some embodiments of the present disclosure.
FIG. 4 illustrates a functional block diagram for optimization of input parameters for desired shelf life of the fried food item, in conjunction with the method for predicting fried food item quality and optimum processing and packaging parameters pertaining to production of the fried food item, according to some embodiments of the present disclosure.
FIG. 5 illustrates a functional block diagram for optimization of the input parameters related to desired quality of the fried food item, according to some embodiments of the present disclosure.

FIGS. 6A and 6B are charts illustrating comparison between accuracy in the predicted values of a moisture content change and an oil uptake and the actual values of the moisture content change and the oil uptake by a frying model, according to some embodiments of the present disclosure.

FIGS. 7A and 7B are use case examples illustrating a change in the moisture content and a change in the oil uptake of the potato chips during the frying process for constant potato chip thickness 2.5 mm corresponding to different frying oil temperatures as predicted by the frying model, according to some embodiments of the present disclosure.

FIGS. 8A and 8B is a use case example illustrating a change in the moisture content and change in the oil uptake of the potato chips during the frying process at constant temperature 160 °C pertaining to different potato chip thickness as predicted by the frying model, according to some embodiments of the present disclosure.

FIG. 9 illustrates a shelf life prediction for the fried food item obtained from simulation study of a packaging model, according to some embodiments of the present disclosure.

FIG. 10 illustrates optimized frying parameters (dots) for same quality (desired oil uptake 28% and moisture content 2%) of the fried food item, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure provides a method and system for predicting fried food item quality and optimizing processing and packaging parameters associated with the fried food item. The present method predicts one or more quality parameters comprising the oil uptake specific to the food item on frying, by providing one or more parameters specific to the food item to be fried, one or more frying oil parameters and one or more frying operating parameters as an input to a frying model. Further, the present method calculates a fat concentration contained in the fried food item prior to packaging based on the predicted oil uptake using a fat conversion model and predicts a shelf life of the fried food item post packaging using a packaging model. Furthermore, the present method optimizes the one or more parameters specific to the fried food item, the one or more frying oil parameters, the one or more frying operating parameters and the one or more packaging parameters using an optimized oil uptake and a threshold moisture content by employing a suitable optimization technique such as Bayesian optimization with a Gaussian process.

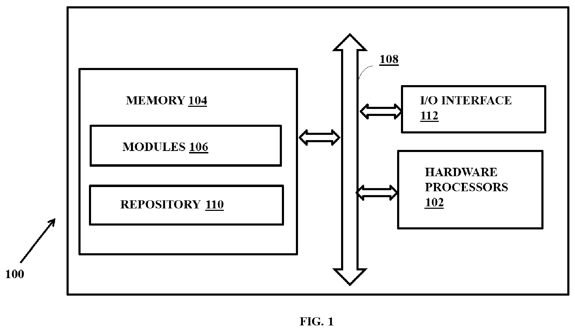

Referring now to the drawings, and more particularly to FIG. 1 through FIG. 10, where similar reference characters denote corresponding features consistently throughout the figures, there are shown preferred embodiments, and these embodiments are described in the context of the following exemplary system and/or method.

FIG. 1 illustrates an exemplary system for predicting fried food item quality and optimum processing and packaging parameters thereof, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

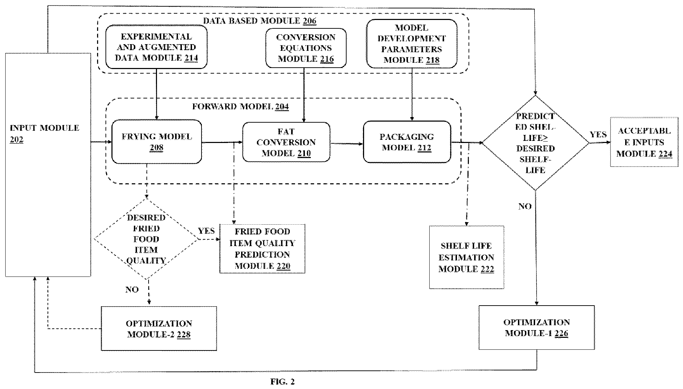

The plurality of modules 106 includes programs or coded instructions that supplement applications or functions performed by the system 100 for predicting fried food item quality and optimum processing and packaging parameters. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for predicting fried food item quality and optimum processing and packaging parameters. In an embodiment, the modules 106 include an input module 202, a forward model 204, a data based module 206, a fried food item quality prediction module 220, a shelf life estimation module 222, an acceptable inputs module 224, an optimization module -1 226 (also referred to as a first optimization module and may be interchangeably used herein) and an optimization module-2 228 (also referred to as a second optimization module and may be interchangeably used herein). The forward model 204 further includes a frying model 208, a fat conversion model 210 and a packaging model 212. The data based module 206 further includes an experimental and augmented data module 214, a conversion equations module 216 and a model development parameters module 218. The modules are depicted in FIG. 2. These modules that are depicted in FIG. 2 are implemented as at least one of a logically self-contained part of a software program, a self-contained hardware component, and/or, a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

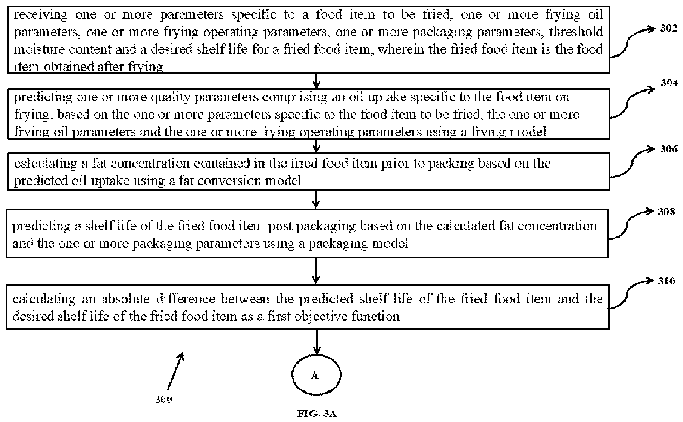

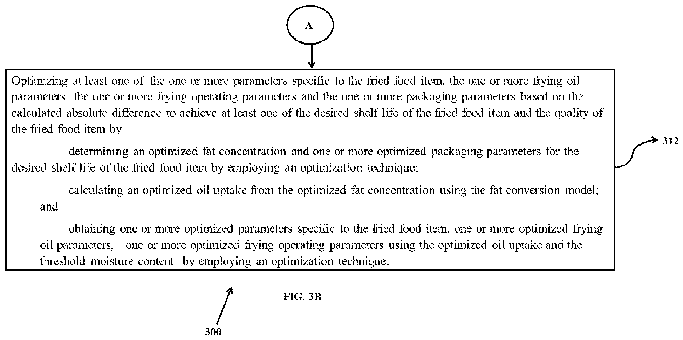

FIGS. 3A and 3B are flow diagrams illustrating the steps involved in a method for predicting fried food item quality and optimum processing and packaging parameters using the systems 100 of FIGS. 1-2, according to some embodiments of the present disclosure. Steps of the method of FIGS. 3A and 3B shall be described in conjunction with the components of FIG. 2. At step 302 of the method 300, the input module 202 executed via one or more hardware processors 102 receives one or more parameters specific to a food item to be fried, one or more frying oil parameters, one or more frying operating parameters, one or more packaging parameters, threshold moisture content and a desired shelf life for a fried food item. The one or more parameters specific to the food item to be fried comprise thickness of the food item, a specific gravity of the food item, a reducing sugar content and the like. Further, the one or more frying oil parameters comprises a free fatty acid content, a drop point and the like. Furthermore, the one or more frying operating parameters comprise a frying time, a frying oil temperature and the like. The one or more packaging parameters comprise one or more packaging material properties including one or more gas permeabilities, a thickness of the packaging material and the like. Shelf life is the recommended maximum time for which food item produce can be stored, during which the defined quality of a specified proportion of the food item remains acceptable under expected (or specified) conditions of distribution, storage and display. The desired shelf life of the fried food item is the shelf life required by the user.

At step 304 of the method 300, the frying model 208 (comprised in the forward model 204) executed via the one or more hardware processors 102 predicts, one or more quality parameters comprising an oil uptake specific to the food item on frying, based on the one or more parameters specific to the food item to be fried, the one or more frying oil parameters and the one or more frying operating parameters using a frying model. The predicted one or more quality parameters further comprises a moisture content change. The frying model 208 is a Machine Learning model, wherein an Artificial Neural Network (ANN) is used to develop the frying model 208.

In an embodiment of the present disclosure, the frying model 208, the fat conversion model 210, and the packaging model 212 are integrated into the larger prediction model/forward model (represented in FIG. 2) to predict the shelf life of the fried food item as a function of frying process parameters and packaging process parameters. The present disclosure employs one or more deep learning techniques including Artificial Neural Network (ANN) model to develop the frying model 208. Further one or more deep learning techniques including Random Forest, recurrent neural network (RNN), Decision tree and the like can also be used. The frying model 208 takes the one or more parameters specific to the food item to be fried, the one or more frying oil parameters, the one or more frying operating parameters as inputs and predicts the quality of the fried food item as an output (as represented by the fried food item quality prediction module 220). The quality of the fried food item is described by the amount of oil uptake by the fried food item (%w/w, wet basis) and the amount of moisture they retain (%w/w, wet basis). To train the frying model 208, an experimental data from the literature (e.g., refer Franco Pedreschi (2012): Frying of Potatoes: Physical, Chemical, and Microstructural Changes, Drying Technology: An International Journal, 30:7, 707-725, Liu, Ying, et al. "Effects of frying temperature and pore profile on the oil absorption behavior of fried potato chips." Food Chemistry 345 (2021): 128832, Warning, Alexander, et al. "Porous media based model for deep-fat vacuum frying potato chips." Journal of Food Engineering 110.3 (2012): 428-440.) was used, and further one or more physics-based models are used to augment the experimental data (represented by the experimental and augmented data module 214 comprised in the data based module 206) as the experimental data was not sufficient. Such a hybrid physics-backed-data-based approach expands the frying model's 208 scope such that all practical cases can be modeled with it.

In the present disclosure, data specific to how the moisture and oil content in the fried food item, for example, potato chip, change during frying (Ying et al. (2021), Alexander et al. (2012), and Pedreschi et al. (2010 (known in the art)) is collected. A sizable amount of data on % oil uptake (%w/w, wet basis) and % moisture retained (%w/w, wet basis) for a combination of frying times, frying oil temperatures, and potato chip thicknesses was curated. On visualizing the data, it was found that the data for moisture was insufficient given there were big gaps in the data for certain ranges of frying temperature or thickness of the potato chips. Table. 1 depicts the experimental data used for development of the frying model (ANN) to predict oil uptake during the frying process.

Table 1: Experimental data for development of the frying model (ANN) to predict Oil uptake during the frying process.

| Time (s) | Frying oil Temperature (°C) | Potato Chips Thickness (mm) | Oil uptake (%w/w, wet basis) | References |
|---|---|---|---|---|
| 0 | 140 | 3 | 0 | Ying et al. (2021) |
| 240 | 140 | 3 | 29.53 | Ying et al. (2021) |
| 120 | 165 | 1.5 | 22.34 | Alexander et al. (2012) |
| 240 | 165 | 1.5 | 34.48 | Alexander et al. (2012) |

In the present disclosure, one or more physics-based models (represented by equation 1 and equation 2) are used for frying process to augment the data for the change in moisture [Pedreschi et al. (2010) (known in the art)]. Change in the moisture content with frying time for slice geometry potato chip can be described by a partial differential equation (1), where $M$ is $\left(\frac{M_t - M_e}{M_i - M_e}\right)$ in which $M_t$ is the moisture content (% w/w, wet basis) in the chips after frying time $t$, $M_e$ is the equilibrium moisture content (% w/w, wet basis), and $M_i$ (% w/w, wet basis) is the initial moisture content of the chips at frying time 0, $D_{eff}$ is the effective diffusivity of water ($\left(mm^2/s\right)$) during frying which changes with time and oil temperature, and $x$ is the thickness of the frying potato chip. The equation was solved by the numerically explicit central difference method, which was implemented in python programming language.

$$\frac{\partial M}{\partial t} = D_{eff} \frac{\partial^2 M}{\partial x^2} \ \ldots\ldots (1)$$

To study the effect of thickness of the potato chips on moisture retention, equation (2) is used. It is a routinely used postulate to estimate effective diffusivity from frying time and thickness of the potato chips. Where $b$ is an empirical parameter in equation (2), whereas $t$ is the frying time (s), $D_o$ is the diffusivity of water ($\left(mm^2/s\right)$), and $L$ is the half-thickness of chips (mm). The values of $D_o$ and $b$ were taken from table (2) to solve the equations (1) and (2). Equation (2) defines the change in effective diffusivity $D_{eff}$ with change in time and temperature. Further, with the change in time and temperature the vales of $D_o$ and b changes, which is calculated by performing the experiments.

$$D_{eff} = D_0 \left(1 + \frac{D_o}{L^2} t\right)^b \ldots\ldots (2)$$

**Table 2:** Input parameters for development of the physics-based model to predict moisture change during the frying process.

| Temperature (°C) | $D_o$ | b | References |
|---|---|---|---|
| 120 | 0.001432 | 3.76 | Pedreschi et al. (2010) |
| 150 | 0.001432 | 4.12 | Pedreschi et al. (2010) |
| 180 | 0.006394 | 3.66 | Pedreschi et al. (2010) |

Table. 2 depicts one or more input parameters for development of the physics-based model(s) to predict moisture change during the frying process. An artificial neural network (ANN) architecture is used to develop the frying model 208 which takes process parameters - frying time (s) and oil temperature (°C) - and thickness of potato chip slices (mm) (in an example embodiment) as inputs and predicts the % oil uptake (%w/w, wet basis) by and % moisture retained (%w/w, wet basis) by the potato chips.

In the present disclosure, implementation of the Artificial neural network (ANN) from the library TensorFlow in Python, and the optimization framework KerasTuner to finetune hyperparameters using the Random Search algorithm. On finetuning, the artificial neural network (ANN) architecture used consisted of 4 layers - input layer (64 nodes), two hidden layers (128 nodes, 32 nodes, respectively), and an output layer (1 node) - and a learning rate of 0.01. Using the artificial neural network (ANN) architecture two separate artificial neural network (ANN) models were developed for the prediction of oil uptake and the moisture content change. Table. 3 depicts Frying (ANN) model accuracy parameters for prediction of the oil uptake and the moisture content change.

**Table 3:** Frying (ANN) model accuracy parameters for prediction of oil uptake and moisture content change.

| Prediction Parameters | Mean square error (MSE) | Mean Absolute error (MAE) | $R^2$ |
|---|---|---|---|
| Oil Uptake (% w/w, wet basis) | 1.08 | 0.4969 | 0.985 |
| Moisture change (M) | 0.00083 | 0.0189 | 0.99 |

At step 306 of the method 300, the fat conversion model 210 (comprised in the forward model 204) executed via the one or more hardware processors 102 calculates a fat concentration contained in the fried food item prior to packaging based on the predicted oil uptake using the fat conversion model. The fat conversion model 210 uses the oil uptake predicted by the frying model 208 as an input to give fat concentration as an output.

In an example embodiment, as Monounsaturated Fatty acids (MUFA) and Poly unsaturated Fatty acids (PUFA) are susceptible to undergo fat deterioration, the fat conversion model 210 calculates the amount of MUFAs/PUFAs present in a unit kg potato chip.

The calculations done by the fat conversion model 210 are based on the following assumptions,

1) The oil comprises approximately 80% of MUFAs/PUFAs, a common composition found in various cooking oils like sunflower oil with 86% combined MUFAs/PUFAs and soybean oil with 76% combined MUFAs/PUFAs. This assumption is grounded in the typical content of cooking oils, where the majority contain around 80% combined MUFAs/PUFAs (# Reference: - Orsavova J, Misurcova L, Ambrozova JV, Vicha R, Mlcek J. Fatty Acids Composition of Vegetable Oils and Its Contribution to Dietary Energy Intake and Dependence of Cardiovascular Mortality on Dietary Intake of Fatty Acids. Int J Mol Sci. 2015 Jun 5;16(6):12871-90. doi: 10.3390/ijms160612871. PMID: 26057750; PMCID: PMC4490476.)

2) The Molecular weight of Fatty acids is 280 g/mol. This assumption was used as the most common MUFAs/PUFAs present in cooking oils are oleic acid, linoleic acid, and linolenic acid with molecular weights of 282 g.mol$^{-1}$, 280 g.mol$^{-1}$ and 278 g.mol$^{-1}$, respectively.

A sample calculation done using the fat conversion model 210 is shown below which is also shown in table (4). Table. 4 depicts the fat (MUFA/PUFA) concentration conversion from the % oil uptake (represented by the conversion equations module 216). Table. 5 depicts the concentration of fat for different values of % oil uptake:

Assume that amount of fried potato chips (F) = 100 g
Assume that % oil uptake obtained from frying model = 28 % w/w
So, amount of oil present in fried potato chips = % oil uptake * F = 28 g in 100 g of fried potato chips
Amount of MUFAs/PUFAs present in fried potato chips = 80% of oil present = 0.8*28 = 22.4 g of MUFAs/PUFAs

Amount of MUFAs/PUFAs (in mol) = 22.4 g / 280 g/mol = 0.080 mol

The Standard measurement of amount of MUFAs/PUFAs are done on per Kg oil/ potato chips basis.

So, the integrator calculates the amount of MUFAs/PUFAs on /Kg potato chips. Amount of MUFAs/PUFAs = 0.080 mol/100g of chips = 0.80 mol/Kg potato chips

**Table 4:** Fat (MUFA/PUFA) concentration conversion from the % oil uptake.

| Fried chips (g) | Oil uptake (% w/w, wb) | Oil present (OP) in fried chips (gm) | MUFA/PUFA content (g) = 0.8 * OP | MUFA/PUFA concentration (mol/kg chips) |
|---|---|---|---|---|
| 100 | 28 | 28 | 22.4 | 0.8 |

**Table 5:** Fat (MUFA/PUFA) concentration corresponding to various % oil uptake value.

| % Oil uptake | Initial fat (MUFA/PUFA) concentration |
|---|---|
| 24.5 | 0.71 mol/kg chips |
| 28 | 0.80 mol/kg chips |
| 30 | 0.85 mol/kg chips |
| 33 | 0.95 mol/kg chips |

At step 308 of the method 300, the packaging model 212 (comprised in the forward model 204) executed via the one or more hardware processors 102 predicts a shelf life of the fried food item post packaging based on the calculated fat concentration and the one or more packaging parameters using a packaging model. The calculated fat concentration and the one or more packaging parameters are provided as input to the packaging model 212. If the predicted shelf life of the fried food item is greater than or equal to the desired shelf life of the fried food item, then the one or more parameters specific to the food item to be fried, then the one or more frying oil parameters, the one or more frying operating parameters and the one or more packaging parameters are considered as acceptable input parameters (represented by the acceptable inputs module 224).

The packaging model 212 takes fat (MUFA/PUFA) concentration as an input, as received from the output of the fat conversion model 210. The package model 212 incorporates an oil deterioration reaction kinetic model (known in the art) along with one or more transport models (known in the art). The oil deterioration reaction kinetic model is a physics based model developed by using Runge-kutta 4th order method (known in the art). The one or more transport models is also a physics based model developed by mass and momentum balance over system (known in the art). Further, the packaging model 212 uses fat (MUFA/PUFA) concentration as the initial condition for simulating the oil deterioration reaction kinetics which consist of a series of lipid oxidation reactions with hexanal as the final product. In the packaging model 212, the reaction kinetics model is solved using the Runge-Kutta Fourth order method (known in the art). The rate constants and one or more values corresponding to the one or more packaging parameters are taken from the literature (captured in Table. 6). Initial gas composition and permeability constant of the packaging material has been used as the one or more packaging parameters in the present disclosure. Table. 6 depicts input parameters for development of the packaging model 212 (represented by the model development parameters module 218). The output of the packaging model 212 is shelf life (days) for a particular initial fat concentration value as an input. The shelf life is estimated/predicted using a limiting value of Hexanal.

Table. 6: Input parameters for development of the packaging model. (Stored in Data based module 206 as shown in FIG. 2)

| Parameter | Parameter Value | Unit | Reference |
|---|---|---|---|
| $K_1$ | $1.5 \times 10^{-4}$ | $h^{-1}$ | Nguyen et. al. (2022) |
| $K_2$ | $1 \times 10^{-2}$ | $((\text{mol/kg chips}) \cdot h)^{-1}$ | Nguyen et. al. (2022) |
| $K_3$ | $1 \times 10^{-3}$ | $((\text{mol/kg chips}) \cdot h)^{-1}$ | Nguyen et. al. (2022) |
| $K_4$ | $6 \times 10^{-5}$ | $h^{-1}$ | Boerkemp et. al. (2019) |
| $V_{HS}$ | 0.007 | $m^3$ | |

(continued)

| Parameter | Parameter Value | Unit | Reference |
|---|---|---|---|
| $V_{BO}$ | 0.007 | $m^3$ | |
| $K_{pe}$ | -15 1x 10 | mol. m$^{-1}$. h$^{-1}$. Pa$^{-1}$ | Zeman et. al. (2012) |

Oil deterioration reaction kinetics: The packaging model 212 consists of reaction kinetic models and mass transfer models. The reaction kinetics model consists of unsaturated fatty acids decomposing into alkyl radical. The alkyl radical forms peroxyl radical due to oxidation in the presence of oxygen dissolved in the oil. The peroxyl radical reacts with unsaturated acid and form lipid hydroperoxides which finally decomposes to volatile compounds such as hexanal.

$$\frac{d[LH]}{dt} = -K_1[LH] - K_3[LOO*][LH] \quad\dots\dots\dots\dots\dots\dots\dots\quad (3)$$

$$\frac{d[L*]}{dt} = K_1[LH] - K_2[L*][O_2] \quad\dots\dots\dots\dots\dots\dots\dots\dots\dots\quad (4)$$

$$\frac{d[LOO*]}{dt} = K_2[L*][O_2] - K_3[LOO*][LH] + K_5[LOOH] \quad\dots\dots\quad (5)$$

$$\frac{d[LOOH]}{dt} = K_3[LOO*][LH] - K_4[LOOH] - K_5[LOOH] \quad\dots\dots\dots\quad (6)$$

$$\frac{d[LO]}{dt} = K_4[LOOH] \quad\dots\dots\dots\dots\dots\dots\dots\dots\dots\dots\dots\dots\dots\dots\dots\dots\dots\quad (7)$$

$$\frac{d[O_2]}{dt} = \emptyset_{o2}{}^{BO} = -K_2[L*][O_2] \dots\dots\dots\dots\dots\dots\dots\dots\dots\dots\dots\dots\quad (8)$$

where, [LH] = Unsaturated fatty acid concentration

[L*] = Alkyl radical concentration
[LOO *] = Peroxyl radical
[O2] = Oxygen concentration in bulk oil
[LOOH] = Concentration of lipid hydroperoxide
[LO] = Concentration of hexanal

Governing equations of $O_2$ mass transfer: The mass transfer models include permeation of oxygen from surrounding to headspace, transfer of oxygen from headspace to bulk oil.

$$\frac{d[O_{2,HS}]}{dt} = \frac{1}{V_{HS}}(\emptyset_{o2}{}^{Pe} + \emptyset_{o2}{}^{S}) \quad\dots\dots\dots\dots\dots\dots\dots\dots\dots\dots\dots\quad (9)$$

$$\frac{d[O_{2,BO}]}{dt} = -\frac{1}{V_{BO}}(\emptyset_{o2}{}^{S} + \emptyset_{o2}{}^{BO}) \quad\dots\dots\dots\dots\dots\dots\dots\quad (10)$$

$$\emptyset_{o2}{}^{Pe} = K_{Pe}\frac{APe}{L}(p_{O2,\infty} - p_{O2,HS}) \quad\dots\dots\dots\dots\dots\dots\dots\quad (11)$$

$$\emptyset_{o2}{}^{S} = K_{O2}\frac{A_L}{RT}(p_{O2,BO} - p_{O2,HS}) \quad\dots\dots\dots\dots\dots\dots\dots\quad (12)$$

Where, [O$_{2,HS}$] = Oxygen concentration in headspace

$[O_{2, BO}]$ = Oxygen concentration in bulk oil

$\emptyset_{o2}^{Pe}$ = Permeation rate of oxygen from surrounding to headspace

$\emptyset_{o2}^{s}$ = Mass transfer rate of oxygen from headspace to bulk oil

**Results:**

The simulation study was performed to understand the effect of the fat (MUFA/PUFA) concentration on shelf life of the packaged fried food item, for example, potato chips.

The parameters values used for the simulation study were obtained from Table. 6. The limiting value of hexanal for shelf life prediction has been used as 0.06 mmol/kg potato chips.

Table. 7 depicts the shelf life of the fried potato chips predicted for various % oil uptake or the fat (MUFA/PUFA) concentration which was obtained from the simulation study of the packaging model.

**Table 7:** Shelf life prediction for various % oil uptake or fat (MUFA/PUFA) concentration.

| % Oil uptake | Fat (MUFA/PUFA) concentration (mol/kg chips) | Shelf life (in days) |
|---|---|---|
| 24.5 | 0.71 | 105 |
| 28 | 0.80 | 100 |
| 30 | 0.85 | 95 |
| 33 | 0.95 | 90 |

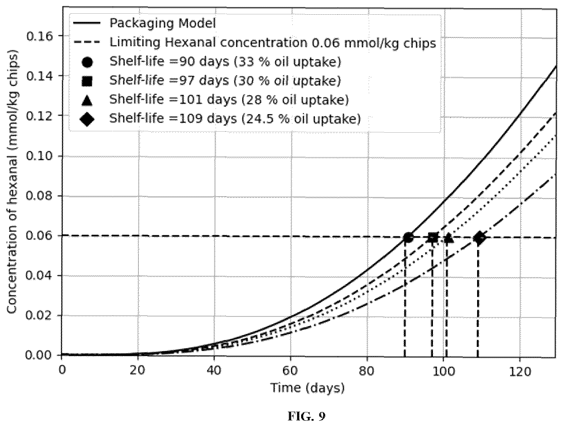

Table. 7 shows shelf life prediction of 4 different fat (MUFA/PUFA) concentrations. The fat (MUFA/PUFA) concentration was taken as 0.71, 0.80, 0.85 and 0.95 for which the predicted shelf life was 105, 100, 95 and 90 days respectively. The simulation study illustrating the hexanal formation and reaching limiting concentration of 0.06 mmol/kg chips is shown in Fig. 9 (e.g., #Reference: - Azarbad, Mohammad Hassan & Jelen, Henryk. (2015). Determination of Hexanal-an Indicator of Lipid Oxidation by Static Headspace Gas Chromatography (SHS-GC) in Fat-Rich Food Matrices. Food Analytical Methods. 8. 10.1007/s12161-014-0043-0.).

At step 310 of the method 300, the one or more hardware processors 102 calculates an absolute difference between the predicted shelf life of the fried food item and the desired shelf life of the fried food item as a first objective function.

At step 312 of the method 300, the optimization model -1 226 executed via the one or more hardware processors 102 optimizes at least one of the one or more parameters specific to the food item, the one or more frying oil parameters, the one or more frying operating parameters and the one or more packaging parameters based on the calculated absolute difference which includes the following steps. An optimized fat concentration and one or more optimized packaging parameters are determined for the desired shelf life of the fried food item by employing an optimization technique. The present disclosures use Bayesian optimization with the Gaussian Process as the optimization technique. The Gaussian process is configured to minimize the first objective function by exploring the fat concentration space and the one or more packaging parameters space. An optimized oil uptake is calculated from the optimized fat concentration using the fat conversion model 210. One or more optimized parameters specific to the fried food item, one or more optimized frying oil parameters, and one or more optimized frying operating parameters are obtained using the optimized oil uptake and the threshold moisture content by employing the Bayesian optimization with the Gaussian process. The Gaussian process is configured to minimize a second objective function by exploring the one or more parameters space specific to the fried food item, the one or more frying oil parameters space and the one or more optimized frying operating parameters space.

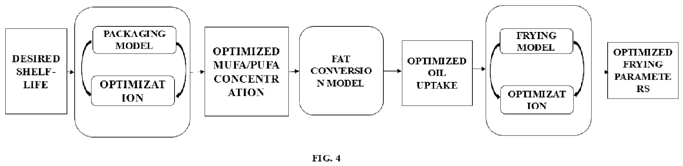

FIG. 4 illustrates a functional block diagram for optimization of input parameters for desired shelf life of the fried food item, in conjunction with the method for predicting fried food item quality and optimum processing and packaging parameters pertaining to the fried food item, according to some embodiments of the present disclosure. The optimization model-1 226 uses multi objective optimization techniques on the forward model 206 (frying model and packaging model represented in FIG. 4) by wrapping a layer of an optimization algorithm around the forward model 206 (Comprised of frying model, fat conversion model, and packaging model) to obtain the one or more optimized parameters specific to the fried food item, the one or more optimized frying oil parameters, the one or more optimized frying operating parameters and the one or more optimized packaging parameters. The multi objective optimization techniques can include a Genetic algorithm, a Bayesian optimization, a Pareto front and the like.

The first objective function for the optimization module-1 is built using forward model 206 comprising the frying model 208, the fat conversion model 210, and the packaging model 212. A Bayesian optimization algorithm, known for its effectiveness in navigating complex and noisy search spaces, then runs over the forward model to minimize the first objective function. As a result of the optimization, optimum values for the one or more parameters specific to the fried food item, the one or more frying oil parameters, the one or more frying operating parameters and the one or more optimized packaging parameters is generated.

The objective of the optimization module-1 226 is to get the optimized oil uptake by using a multi-objective optimization of the one or more packaging parameters and the one or more quality parameters specific to the fried food item. For instance, enhance shelf life, reduce operating cost, reduce packaging cost, increase yield, reduce energy consumption, reduce product waste, maintain quality of product etc., and the same is illustrated in the use cases in the later sections. The optimization module-1 226 employs Bayesian Optimization with Gaussian Process to determine the fat concentration needed for the desired shelf life. The optimization module-1 226 utilizes the absolute difference between the predicted shelf life (Estimated shelf life) and the desired shelf life as the objective function (also referred as the first objective function) as per equation (13), wherein the predicted (estimated) shelf life comes from the packaging model 212. The optimization module-1 226 optimizes the one or more frying parameters such as frying time, temperature, and chip thickness for desired shelf life. The optimization module-1 226 aims to minimize the first objective function (represented by equation - 13) by exploring the fat concentration and the one or more packaging parameters such as initial gas composition and permeability constant space using the Gaussian Process. The resultant optimized initial fat concentration is used as an input to the fat conversion model which calculates the optimized oil uptake.

*Objective Function (Packaging model) = f(desired shelf life - perdicted shelf life)* (13)

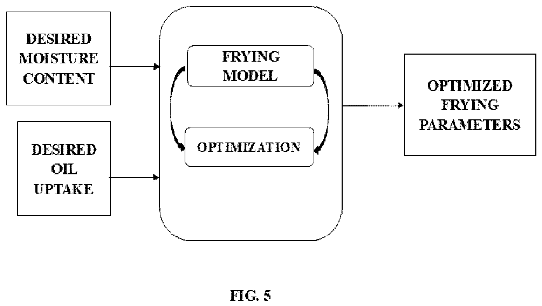

FIG. 5 illustrates a functional block diagram for optimization of the input parameters for the desired fried food item quality, in conjunction with the method for predicting fried food item quality and optimum processing and packaging parameters, according to some embodiments of the present disclosure. The calculated optimum oil uptake is used with the threshold moisture content ($\leq$ 2 % w/w, wb) to get the optimum input parameters. The threshold moisture content and optimized oil uptake are changed with the desired moisture content and desired oil uptake in the optimization module -2 228 to get the optimum input parameters for desired fried food item quality.

The optimized oil uptakes (desired oil uptake) and threshold moisture content (desired moisture content) used in the optimization module-2 228 based on the frying model 208 to optimize the one or more parameters specific to the fried food item, the one or more frying oil parameters and the one or more frying operating parameters. The objective of these optimizations (represented by the optimization module-1 226 and the optimization module-2 228) is to get the optimized input parameters by using a multi-objective optimization of the frying parameters (frying time) and the fried food item quality parameters (desired moisture content and desired oil uptake). The second objective function (multi-objective) is used to get the optimized input parameters such as frying time, frying oil temperature, chips thickness and the one or more packaging parameters. The second objective function is defined by the equation (14) in which three objectives are used to construct it, (1) minimize the difference between the optimized (or Desired) and predicted oil uptake, (2) minimize difference between Threshold (or desired) and predicted moisture content and (3) minimum frying time. It is going to be minimized by exploring the frying oil, frying oil temperature, and chip thickness spaces using the Gaussian Process for desired oil and moisture content. Desired oil uptake is the one which is provided to the system by a user to optimize frying parameters. Desired moisture content is the one which is provided to the system by the user to optimize frying parameters.

*Objective Function (Frying model) = f(Optimized/desired oil - perdicted oil, Desired/threshold moisture - Predicted moisture, frying time)* (14)

This objective function (also referred as the second objective function) has three different objectives to be minimized by exploring the frying time, frying oil temperature and chips thickness space.

Objective 1: To minimize difference between optimized (Desired) and predicted moisture content.
Objective 2: To minimize difference between optimized (Desired) and predicted oil uptake.
Objective 3: To minimize frying time.

$$\text{Objective function} = \text{Objective 1} + \text{Objective 2} + \text{Objective 3}$$

In objective 1 and 2, the values of the predicted moisture and oil uptake come from the frying model 208 for a given input of frying time, frying oil temperature and potato chips thickness space. And desired values of the oil uptake and the moisture content given by the user.
In objective 3, the value of frying time comes from the value used for the prediction of the moisture content and the oil uptake.
It is to be noted that in objective function 1, desired moisture content and the threshold moisture content values are changing, but the significance remains the same. Further it is to be noted that in objective function 2, desired oil content and optimized oil uptake values are changing, but the significance remains the same.

The optimization module-1 226 is used to predict the one or more optimized parameters specific to the fried food item, the one or more optimized frying oil parameters, the one or more optimized frying operating parameters and the one or more packaging parameters for a given desired shelf life and desired (threshold) moisture as inputs. The present disclosure considered 5 different values of desired shelf life and less than or equal to 2 % (w/w, wb) desired (Threshold) moisture content for all cases. These values were considered as inputs to the optimization module-1 226. For each desired shelf life, the packaging model 212 gives the optimized fat concentration. This optimized fat concentration is used by the fat conversion model 210 to give the corresponding optimized oil uptake. Then, the frying model 208 uses this optimized oil uptake and desired moisture content for each case to predict the values for optimized frying parameters. All these values conversions are given in the table (8). Table. 8 depicts calculation of optimized frying parameters from the desired shelf life and desired moisture.

Table 8: Calculation of optimized frying parameters from the desired shelf life and desired moisture.

| Desired Shelf life (in days) | Desired moisture (%w/w, wb) | Initial fat (MUFA/PUFA) concentration (mol/kg chips) | % Oil uptake (% w/w, wb) | Optimized Frying time (s) | Optimized Frying temp (°C) | Optimized Chip Thickness (mm) |
|---|---|---|---|---|---|---|
| 85 | ≤ 2 | 1.02 | 35.70 | 236 | 120 | 1.5 |
| 90 | ≤ 2 | 0.95 | 33.25 | 206 | 177 | 1.5 |
| 95 | ≤ 2 | 0.87 | 30.45 | 169 | 180 | 2.34 |
| 100 | ≤ 2 | 0.8 | 28 | 143 | 180 | 2.17 |
| 105 | ≤ 2 | 0.74 | 25.9 | 140 | 175 | 1.7 |

The optimized frying parameters into the forward model 204 to predict the shelf life of the fried food item as depicted in the Table. 9. The aim of this activity is to get the accuracy of the optimization module-1 226. So, the desired shelf life of the fried food item and the predicted shelf life of the fried food item using the optimized values are compared in the table (9) and evaluated using the absolute % error which shows that there is 0% to 2.35% error in the prediction of the optimal solution for the desired shelf life of the fried food item.

Table 9: Comparison of the desired shelf life and shelf life predicted using the optimized values.

| Optimized Frying time (s) | Optimized Frying temp (°C | Optimized Chip Thickness (mm) | Predicted shelf life (in days | Desired Shelf life (in days) | Absolute % error in shelf life prediction |
|---|---|---|---|---|---|
| 236 | 120 | 1.5 | 87 | 85 | 2.35 |
| 206 | 177 | 1.5 | 90 | 90 | 0 |
| 169 | 180 | 2.34 | 96 | 95 | 1.05 |
| 143 | 180 | 2.17 | 101 | 100 | 1 |
| 140 | 175 | 1.7 | 106 | 105 | 0.95 |

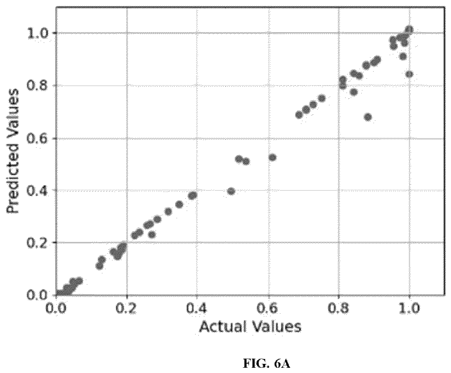

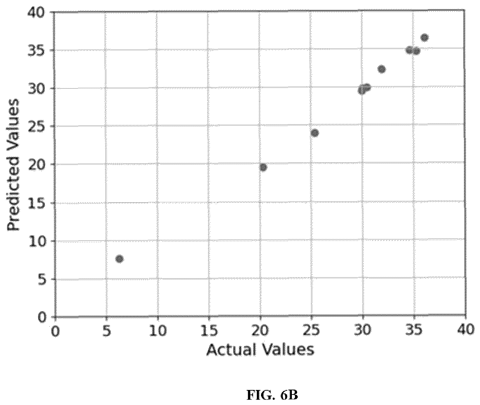

FIGS. 6A and 6B charts illustrate comparison between accuracy in the predicted values of a moisture content change and an oil uptake and the actual values of the moisture content change and the oil uptake by a frying model, according to some embodiments of the present disclosure.

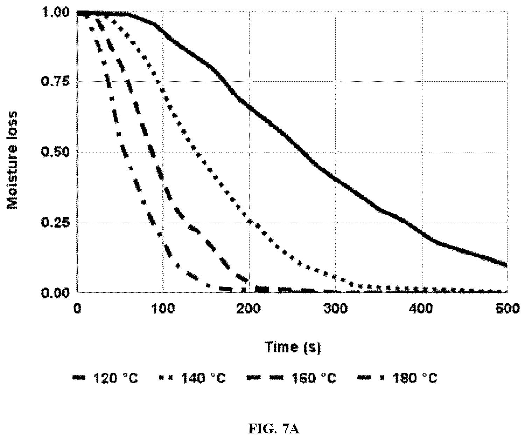

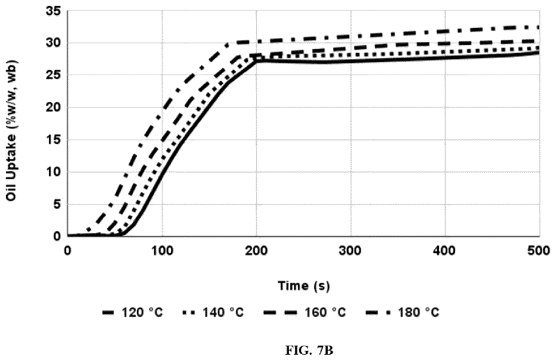

FIGS. 7A and 7B are use case examples illustrating a change in the moisture content and a change in the oil uptake of the potato chips during the frying process for constant potato chip thickness 2.5 mm corresponding to different frying oil temperatures as predicted by the frying model, according to some embodiments of the present disclosure.

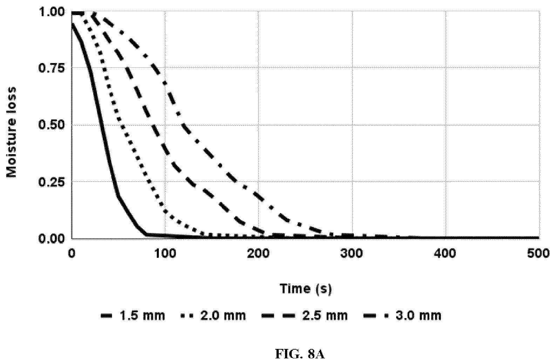

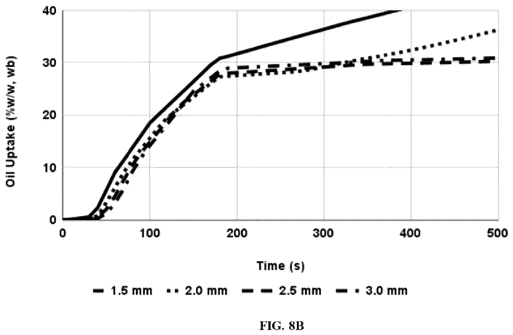

FIGS. 8A and 8B are use cases examples illustrating a change in the moisture content and a change in the oil uptake of the potato chips during the frying process at constant temperature 160 °C and different potato chip thickness as predicted by the frying model, according to some embodiments of the present disclosure.

FIG. 9 illustrates a shelf life prediction obtained from simulation study of a packaging model, according to some embodiments of the present disclosure.

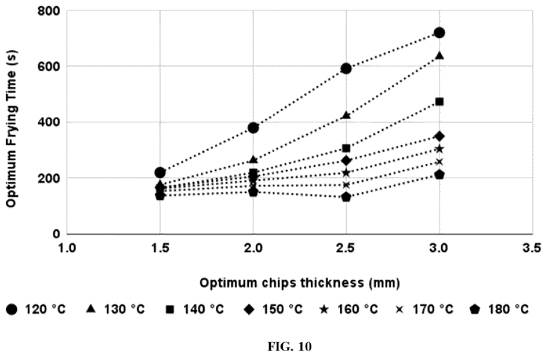

FIG. 10 illustrates optimized frying parameters (dots) for same quality (desired oil uptake 28% and moisture content 2%) of fried food item, according to some embodiments of the present disclosure.

Use case example for the present disclosure are listed below:

## Use Case 1: Enhance the shelf life.

As shown in FIG. 2, if the desired shelf life of the fried food item is changed, the optimum input parameters for the changed desired shelf life of the fried food item can be obtained.

## Use Case 2: Desired Quality of Fried Chips

To get the desired quality of the fried potato chips the optimization module -1 226 can be used. Let's consider one case in which the desired oil uptake is 28% and the desired moisture content is 2%. Using these values as inputs to the frying model 208, it predicts the optimized frying parameters such as frying time, frying oil temperature, and chip thickness. But, using the frying model 208 it is possible to design a simulation which gives the different combination of frying time, frying oil temperature and the potato chip thickness for same quality of potato chips as shown in the Fig. 10.

## Use Case 3: Maximum Capacity for a Desired Quality of Fried Chips.

Referring to FIG. 10, for the different frying input parameters (frying time, frying oil temperature, potato chips thickness) the frying model 208 gives the same desired quality parameters. Which indicates there are many combinations that are possible to get the desired quality of the fried potato chips.

Table. 10 depicts calculation of the number of batches produced at different initial frying conditions. The present disclosure considers condition (1) (shown in Table. 10) in which frying process is operating at 160°C with the potato chips thickness of 3 mm to achieve 28 % oil uptake and 2% moisture content. For that frying take 303 seconds which is the minimum time required to achieve this desired quality of the fried potato chips for that input parameters. Similarly consider condition (3) in which frying process is operating at 160°C with the potato chips thickness of 2 mm. For that frying takes 161 seconds to achieve the same quality parameters. In industry, if the frying process is operating under condition (1) for 24 hours, it produces 285 batches but if it is operating under condition (3), it produces 536 batches. Consider condition (2) which takes 258 seconds frying time at 170°C with the chips thickness of 3 mm to achieve same desired quality of the potato chip. Using condition (2) in 24 hours 334 batches are produced.

**Table 10:** Calculation of the number of batches produced at different initial frying conditions.

| Condition | Temperature (°C) | Chip Thickness (mm) | Optimized frying time (s) | No. of batches produced in 24 hours |
|---|---|---|---|---|
| 1 | 160 | 3 | 303 | 285 |
| 2 | 170 | 3 | 258 | 334 |
| 3 | 160 | 2 | 161 | 536 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Existing techniques lack control over how the processes involved in the manufacturing of the fried food item affect each other and the final quality of the fried food item can lead to systemic losses in raw materials and sub-optimal set points for process parameters. The embodiment provides a method and system for predicting fried food item quality and optimum processing and packaging parameters. The present disclosure integrates the frying and packaging processes in the manufacturing of fried food item. Moreover, the embodiments herein further provide a way to optimize process parameters of the frying process based on the maximum shelf life that can be attained after the packaging process. This form of process integration can help mitigate wastage of food item to be fried and frying oil, help enhance process capacity by reducing frying time, or lower costs by reducing required frying oil temperature.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1.  A processor implemented method (300), comprising:

    receiving (302), via one or more hardware processors, one or more parameters specific to a food item to be fried, one or more frying oil parameters, one or more frying operating parameters, one or more packaging parameters, threshold moisture content and a desired shelf life for a fried food item, wherein the fried food item is the food item obtained after frying;
    predicting (304), via the one or more hardware processors, one or more quality parameters comprising an oil uptake specific to the food item on frying, based on the one or more parameters specific to the food item to be fried, the one or more frying oil parameters and the one or more frying operating parameters using a frying model;
    calculating (306), via the one or more hardware processors, a fat concentration contained in the fried food item prior to packing based on the predicted oil uptake using a fat conversion model;
    predicting (308), via the one or more hardware processors, a shelf life of the fried food item post packaging based on the calculated fat concentration and the one or more packaging parameters using a packaging model;
    calculating (310), via the one or more hardware processors, an absolute difference between the predicted shelf life of the fried food item and the desired shelf life of the fried food item as a first objective function; and
    optimizing (312), via the one or more hardware processors, at least one of the one or more parameters specific to the fried food item, the one or more frying oil parameters, the one or more frying operating parameters and the one or more packaging parameters based on the calculated absolute difference to achieve at least one of the desired shelf life of the fried food item and the quality of the fried food item by -

determining an optimized fat concentration and one or more optimized packaging parameters for the desired shelf life of the fried food item by employing an optimization technique;

calculating an optimized oil uptake from the optimized fat concentration using the fat conversion model; and obtaining one or more optimized parameters specific to the fried food item, one or more optimized frying oil parameters and one or more optimized frying operating parameters using the optimized oil uptake and the threshold moisture content by employing an optimization technique.

2. The processor implemented method as claimed in claim 1, wherein the one or more parameters specific to the food item to be fried comprise a thickness of the food item, a specific gravity of the food item and a reducing sugar content.

3. The processor implemented method as claimed in claim 1, wherein the one or more frying oil parameters comprise a free fatty acid content and a drop point.

4. The processor implemented method as claimed in claim 1, wherein the one or more frying operating parameters comprise a frying time, and a frying oil temperature.

5. The processor implemented method as claimed in claim 1, wherein the one or more packaging parameters comprise one or more packaging material properties including one or more gas permeabilities and a thickness of the packaging material, mechanical strength, and gas composition.

6. The processor implemented method as claimed in claim 1, wherein the predicted one or more quality parameters further comprises a moisture content change.

7. The processor implemented method as claimed in claim 1, wherein the optimization technique used to determine the optimized fat concentration comprise a Bayesian optimization with a Gaussian Process, wherein the Gaussian process is configured to minimize the first objective function by exploring the fat concentration space and the one or more packaging parameters space.

8. The processor implemented method as claimed in claim 1, wherein the optimization technique used to obtain the one or more optimized parameters specific to the fried food item, the one or more optimized frying oil parameters and the one or more optimized frying operating parameters comprise the Bayesian optimization with the Gaussian process, wherein the Gaussian process is configured to minimize a second objective function by investigating the one or more parameters space specific to the food item, the one or more frying oil parameters space and the one or more frying operating parameters space.

9. A system (100), comprising:

a memory (104) storing instructions;
one or more communication interfaces (112); and
one or more hardware processors (102) coupled to the memory (104) via the one or more communication interfaces (112), wherein the one or more hardware processors (102) are configured by the instructions to:

receive one or more parameters specific to a food item to be fried, one or more frying oil parameters, one or more frying operating parameters, one or more packaging parameters, threshold moisture content and a desired shelf life for a fried food item, wherein the fried food item is the food item obtained after frying;
predict one or more quality parameters comprising an oil uptake specific to the food item on frying, based on the one or more parameters specific to the food item to be fried, the one or more frying oil parameters and the one or more frying operating parameters using a frying model;
calculate a fat concentration contained in the fried food item prior to packing based on the predicted oil uptake using a fat conversion model;
predict a shelf life of the fried food item post packaging based on the calculated fat concentration and the one or more packaging parameters using a packaging model;
calculate an absolute difference between the predicted shelf life of the fried food item and the desired shelf life of the fried food item as a first objective function; and
optimize at least one of the one or more parameters specific to the fried food item, the one or more frying oil parameters, the one or more frying operating parameters and the one or more packaging parameters based on the calculated absolute difference to achieve at least one of the desired shelf life of the fried food item and the quality of the fried food item by -

determining an optimized fat concentration and one or more optimized packaging parameters for the desired shelf life of the fried food item by employing an optimization technique;

calculating an optimized oil uptake from the optimized fat concentration using the fat conversion model; and

obtaining one or more optimized parameters specific to the fried food item, one or more optimized frying oil parameters and one or more optimized frying operating parameters using the optimized oil uptake and the threshold moisture content by employing an optimization technique.

10. The system as claimed in claim 9, wherein the one or more parameters specific to the food item to be fried comprise a thickness of the food item, a specific gravity of the food item and a reducing sugar content, wherein the one or more frying oil parameters comprise a free fatty acid content and a drop point, wherein the one or more frying operating parameters comprise a frying time, and a frying oil temperature, and wherein the one or more packaging parameters comprise one or more packaging material properties including one or more gas permeabilities and a thickness of the packaging material, mechanical strength, and gas composition.

11. The system as claimed in claim 9, wherein the predicted one or more quality parameters further comprises a moisture content change.

12. The system as claimed in claim 9, wherein the optimization technique used to determine the optimized fat concentration comprises a Bayesian optimization with a Gaussian Process, and wherein the Gaussian process is configured to minimize the first objective function by exploring the fat concentration space and the one or more packaging parameters space.

13. One or more non-transitory machine-readable information storage mediums comprising one or more instructions which when executed by one or more hardware processors cause:

receiving one or more parameters specific to a food item to be fried, one or more frying oil parameters, one or more frying operating parameters, one or more packaging parameters, threshold moisture content and a desired shelf life for a fried food item, wherein the fried food item is the food item obtained after frying;

predicting one or more quality parameters further comprising an oil uptake specific to the food item on frying, based on the one or more parameters specific to the food item to be fried, the one or more frying oil parameters and the one or more frying operating parameters using a frying model;

calculating a fat concentration contained in the fried food item prior to packing based on the predicted oil uptake using a fat conversion model;

predicting a shelf life of the fried food item post packaging based on the calculated fat concentration and the one or more packaging parameters using a packaging model;

calculating an absolute difference between the predicted shelf life of the fried food item and the desired shelf life of the fried food item as a first objective function; and

optimizing at least one of the one or more parameters specific to the fried food item, the one or more frying oil parameters, the one or more frying operating parameters and the one or more packaging parameters based on the calculated absolute difference to achieve at least one of the desired shelf life of the fried food item and the quality of the fried food item by -

determining an optimized fat concentration and one or more optimized packaging parameters for the desired shelf life of the fried food item by employing an optimization technique;

calculating an optimized oil uptake from the optimized fat concentration using the fat conversion model; and

obtaining one or more optimized parameters specific to the fried food item, one or more optimized frying oil parameters and one or more optimized frying operating parameters using the optimized oil uptake and the threshold moisture content by employing an optimization technique.

14. The one or more non-transitory machine-readable information storage mediums as claimed in claim 13, wherein the one or more parameters specific to the food item to be fried comprise a thickness of the food item, a specific gravity of the food item and a reducing sugar content, wherein the one or more frying oil parameters comprise a free fatty acid content and a drop point, the one or more frying operating parameters comprise a frying time, and a frying oil temperature, wherein the one or more packaging parameters comprise one or more packaging material properties including one or more gas permeabilities and a thickness of the packaging material, mechanical strength, and gas composition, and wherein the predicted one or more quality parameters further comprises a moisture content change.

15. The one or more non-transitory machine-readable information storage mediums of claim 13, wherein the optimization technique used to determine the optimized fat concentration comprise a Bayesian optimization with a Gaussian Process, wherein the Gaussian process is configured to minimize the first objective function by exploring the fat concentration space and the one or more packaging parameters space, and wherein the optimization technique used to obtain the one or more optimized parameters specific to the fried food item, the one or more optimized frying oil parameters and the one or more optimized frying operating parameters comprise the Bayesian optimization with the Gaussian process, wherein the Gaussian process is configured to minimize a second objective function by investigating the one or more parameters space specific to the food item, the one or more frying oil parameters space and the one or more frying operating parameters space.

FIG. 1

FIG. 2

receiving one or more parameters specific to a food item to be fried, one or more frying oil parameters, one or more frying operating parameters, one or more packaging parameters, threshold moisture content and a desired shelf life for a fried food item, wherein the fried food item is the food item obtained after frying                                                             302

predicting one or more quality parameters comprising an oil uptake specific to the food item on frying, based on the one or more parameters specific to the food item to be fried, the one or more frying oil parameters and the one or more frying operating parameters using a frying model                    304

calculating a fat concentration contained in the fried food item prior to packing based on the predicted oil uptake using a fat conversion model                                                              306

predicting a shelf life of the fried food item post packaging based on the calculated fat concentration and the one or more packaging parameters using a packaging model                                        308

calculating an absolute difference between the predicted shelf life of the fried food item and the desired shelf life of the fried food item as a first objective function                                       310

A

300

FIG. 3A

A

Optimizing at least one of the one or more parameters specific to the fried food item, the one or more frying oil parameters, the one or more frying operating parameters and the one or more packaging parameters based on the calculated absolute difference to achieve at least one of the desired shelf life of the fried food item and the quality of the fried food item by

  determining an optimized fat concentration and one or more optimized packaging parameters for the desired shelf life of the fried food item by employing an optimization technique;

  calculating an optimized oil uptake from the optimized fat concentration using the fat conversion model; and

  obtaining one or more optimized parameters specific to the fried food item, one or more optimized frying oil parameters, one or more optimized frying operating parameters using the optimized oil uptake and the threshold moisture content by employing an optimization technique.

312

FIG. 3B

300

FIG. 4

FIG. 5

FIG. 6A

**FIG. 6B**

FIG. 7A

FIG. 7B

FIG. 8A

FIG. 8B

FIG. 9

FIG. 10

Europäisches
Patentamt

European
Patent Office

Office européen
des brevets

# EUROPEAN SEARCH REPORT

**Application Number**

EP 25 18 4504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GOEL CHARU ET AL: "Development and storage stability of buckwheat chips using response surface methodology (RSM)", JOURNAL OF FOOD SCIENCE AND TECHNOLOGY, SPRINGER (INDIA) PRIVATE LTD, INDIA, vol. 55, no. 12, 16 October 2018 (2018-10-16), pages 5064-5074, XP036634244, ISSN: 0022-1155, DOI: 10.1007/S13197-018-3445-Y [retrieved on 2018-10-16] * the whole document * | 1-15 | INV. A23L19/18 G06Q10/04 |
| A | MARASCA E ET AL: "Impact of nitrogen flushing and oil choice on the progression of lipid oxidation in unwashed fried sliced potato crisps", FOOD CHEMISTRY, ELSEVIER LTD, NL, vol. 199, 30 November 2015 (2015-11-30), pages 81-86, XP029386244, ISSN: 0308-8146, DOI: 10.1016/J.FOODCHEM.2015.11.136 * pages 81, 83 * | 1-15 | |
| | | | TECHNICAL FIELDS SEARCHED (IPC) |
| | | | G06Q |
| A | PFEIFFER C ET AL: "OPTIMIZING FOOD PACKAGING AND SHELF LIFE", FOOD TECHNOLOGY, INSTITUTE OF FOOD TECHNOLOGISTS, CHICAGO, IL, US, vol. 53, no. 6, 30 June 1999 (1999-06-30), page 52, XP000848703, ISSN: 0015-6639 * the whole document * | 1-15 | |

-/--

The present search report has been drawn up for all claims

| Place of search | Date of completion of the search | Examiner |
|---|---|---|
| Munich | 24 October 2025 | Diaz Calvo, Sonia |

Europäisches
Patentamt

European
Patent Office

Office européen
des brevets

# EUROPEAN SEARCH REPORT

**Application Number**

EP 25 18 4504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FALOYE O. R. ET AL: "Influence of frying parameters and optimization of deep fat frying conditions on the physicochemical and textural properties of chicken nuggets from FUNAAB-Alpha broilers", SN APPLIED SCIENCES, vol. 3, no. 2, 29 January 2021 (2021-01-29), XP093328000, ISSN: 2523-3963, DOI: 10.1007/s42452-021-04249-5 * abstract * | 1-15 | |
| A | PEÑALVER-SOTO JOSE LUCAS ET AL: "Multiobjective Optimization of a Frying Process Balancing Acrylamide Formation and Quality: Solution Analysis and Uncertainty Propagation", FOODS, vol. 11, no. 22, 17 November 2022 (2022-11-17), page 3689, XP093328011, CH ISSN: 2304-8158, DOI: 10.3390/foods11223689 * abstract * | 1-15 | |
| A | MANEEROTE J ET AL: "Optimization of processing conditions to reduce oil uptake and enhance physico-chemical properties of deep fried rice crackers", LWT- FOOD SCIENCE AND TECHNOLOGY, ACADEMIC PRESS, UNITED KINGDOM, vol. 42, no. 4, 31 May 2009 (2009-05-31), pages 805-812, XP025885555, ISSN: 0023-6438, DOI: 10.1016/J.LWT.2008.11.012 [retrieved on 2008-12-07] * abstract * | 1-15 | |

**TECHNICAL FIELDS SEARCHED (IPC)**

-/--

The present search report has been drawn up for all claims

| Place of search | Date of completion of the search | Examiner |
|---|---|---|
| Munich | 24 October 2025 | Diaz Calvo, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                           

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALI GANJLOO ET AL: "Process optimization for low-fat deep-fried zucchini slices preparation: Effect of Aloe vera gel coating concentration, frying temperature, and frying time", JOURNAL OF FOOD PROCESSING AND PRESERVATION, WILEY-BLACKWELL PUBLISHING, INC, TRUMBULL, CT, US, vol. 46, no. 12, 21 September 2022 (2022-09-21), page n/a, XP072734286, ISSN: 0145-8892, DOI: 10.1111/JFPP.17158 * abstract * | 1-15 | |
| A | SANCHES SILVA A ET AL: "Modified atmosphere packaging and temperature effect on potato crisps oxidation during storage", ANALYTICA CHIMICA ACTA, ELSEVIER, AMSTERDAM, NL, vol. 524, no. 1-2, 25 October 2004 (2004-10-25), pages 185-189, XP004573539, ISSN: 0003-2670, DOI: 10.1016/J.ACA.2004.06.010 * abstract * | 1-15 | **TECHNICAL FIELDS SEARCHED (IPC)** |
| A | CN 108 477 590 A (YANGZHOU YECHUN TASTE PRODUCTION AND DISTRIB CO LTD; UNIV JIANGNAN) 4 September 2018 (2018-09-04) * claim all; figure all * | 1-15 | |

The present search report has been drawn up for all claims

| Place of search | Date of completion of the search | Examiner |
|---|---|---|
| Munich | 24 October 2025 | Diaz Calvo, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 4504

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | Publication date |
|---|---|---|---|
| CN 108477590 A | 04-09-2018 | NONE | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421052479

**Non-patent literature cited in the description**

- **FRANCO PEDRESCHI**. Frying of Potatoes: Physical, Chemical, and Microstructural Changes, Drying Technology. *An International Journal*, 2012, vol. 30 (7), 707-725
- **LIU** ; **YING et al.** Effects of frying temperature and pore profile on the oil absorption behavior of fried potato chips.. *Food Chemistry*, 2021, vol. 345, 128832
- **WARNING** ; **ALEXANDER et al.** Porous media based model for deep-fat vacuum frying potato chips.. *Journal of Food Engineering*, 2012, vol. 110 (3), 428-440
- **ORSAVOVA J** ; **MISURCOVA L** ; **AMBROZOVA JV** ; **VICHA R** ; **MLCEK J**. Fatty Acids Composition of Vegetable Oils and Its Contribution to Dietary Energy Intake and Dependence of Cardiovascular Mortality on Dietary Intake of Fatty Acids. *Int J Mol Sci*, 05 June 2015, vol. 16 (6), 12871-90
- **AZARBAD** ; **MOHAMMAD HASSAN** ; **JELEN** ; **HENRYK**. Determination of Hexanal-an Indicator of Lipid Oxidation by Static Headspace Gas Chromatography (SHS-GC) in Fat-Rich Food Matrices. *Food Analytical Methods*, 2015